(19) Europäisches Patentamt
European Patent Office
Office européen des brevets

(11) **EP 1 525 041 B1**

(12) **EUROPÄISCHE PATENTSCHRIFT**

(45) Veröffentlichungstag und Bekanntmachung des Hinweises auf die Patenterteilung:
**20.02.2013 Patentblatt 2013/08**

(21) Anmeldenummer: 03784083.2

(22) Anmeldetag: **26.07.2003**

(51) Int Cl.:
**B01D 29/23** (2006.01)   **B01D 46/52** (2006.01)

(86) Internationale Anmeldenummer:
**PCT/EP2003/008271**

(87) Internationale Veröffentlichungsnummer:
**WO 2004/014516 (19.02.2004 Gazette 2004/08)**

(54) **FILTERELEMENT UND VERFAHREN ZU DESSEN HERSTELLUNG**

FILTER ELEMENT AND METHOD FOR THE PRODUCTION THEREOF

ELEMENT DE FILTRAGE ET PROCEDE DE FABRICATION

(84) Benannte Vertragsstaaten:
**AT BE BG CH CY CZ DE DK EE ES FI FR GB GR HU IE IT LI LU MC NL PT RO SE SI SK TR**

(30) Priorität: **02.08.2002 DE 10235275**

(43) Veröffentlichungstag der Anmeldung:
**27.04.2005 Patentblatt 2005/17**

(73) Patentinhaber: **HYDAC FILTERTECHNIK GMBH**
**66280 Sulzbach/Saar (DE)**

(72) Erfinder:
• **MEES, Harald**
**66822 Lebach (DE)**

• **SAKRASCHINSKY, Michael**
**66386 St. Ingbert (DE)**

(74) Vertreter: **Bartels, Martin Erich Arthur**
**Patentanwälte**
**Bartels und Partner**
**Lange Strasse 51**
**70174 Stuttgart (DE)**

(56) Entgegenhaltungen:
**US-A- 4 735 720       US-A- 5 622 624**
**US-B1- 6 368 506**

**Beschreibung**

Die Erfindung bezieht sich auf ein Filterelement umfassend einen Filterzylinder aus einer Filtermattenbahn, die eine Folge von zumindest bereichsweise aneinander anliegenden Falten aufweist und deren beide Enden an einer Verbindungsstelle zur Bildung eines Ringkörpers miteinander verbunden sind, eine im Bereich der Verbindungsstelle angeordnete Halteeinrichtung, die bei einer Durchströmung von zu filterndem Fluid von einer Innenseite zur Außenseite des Filterzylinders ein Trennen der Enden der Filtermattenbahn verhindert. Außerdem bezieht sich die Erfindung auf ein Verfahren zur Herstellung eines solchen Filterelementes.

Ein derartiges Filterelement ist beispielsweise aus US 5,622,624 bekannt. Bei dem bekannten Filterelementen ist die Halteeinrichtung als spreizbares Metallteil ausgebildet, welches mantelartig an der Außenseite des Ringkörpers anliegt und dessen freie Enden an der Verbindungsstelle die Enden der Filtermattenbahn klemmenartig aneinanderdrücken. Das Metallteil bildet weiter ein Bett für ein Klebstoffmaterial, welches zur Ausbildung einer festen Verbindung in den Bereich zwischen den miteinander verbundenen Enden der Filtermattenbahn und den sich anschließenden Falten eingegossen wird. Durch das Klebstoffbett sind die Enden der Filtermattenbahn unlösbar miteinander verbunden.

Die US 6, 368, 506 B1 beschreibt einen Filter, insbesondere einen Ölfilter, mit einem Stützrohr, das in seinem Inneren einen Raum für filtriertes Fluid bildet. Ein Filterelement umgibt das Stützrohr außen. Das Filterelement ist in plissierter Form ausgebildet und die Enden des Filterelements sind, sich gegenüberliegend, aneinander gehalten. Eine Halteeinrichtung in der Art eines Klemmstreifens ist an der Außenseite des Stützrohres hierzu vorgesehen.

Filterelemente sind handelsüblich und finden beispielsweise bei Hydraulikanlagen in von Hydraulikölen durchströmten Systemzweigen verbreitete Anwendung. Die bekannten Filterelemente sind hinsichtlich ihrer Betriebssicherheit und der Stabilität des für die Filterleistung maßgebenden Betawertes nicht völlig zufriedenstellend. Insbesondere bei hohen Durchflußleistungen besteht die Gefahr, dass es an der Verbindungsstelle, an der die Enden der Filtermattenbahn zu dem den Filterzylinder bildenden Ringkörper vereinigt sind, zu Verformungen oder Beschädigungen aufgrund des Fluid-Differenzdruckes kommt, der an der Verbindungsstelle wirksam ist. Solche Beeinträchtigungen und/oder Verformungen der Falten im Bereich der Verbindungsstelle sind hier mit dem allgemeinen Ausdruck "Beulen der Falten" bezeichnet.

Der Erfindung liegt die Aufgabe zugrunde, ein Filterelement zu schaffen, das sich gegenüber dem Stand der Technik durch eine verbesserte Betriebssicherheit und bessere Betawertstabilität, selbst bei hohen Durchflußleistungen, auszeichnet.

Diese Aufgabe wird gelöst durch ein Filterelement mit den Merkmalen von Patentanspruch 1 in seiner Gesamtheit. Ein erfindungsgemäßes Filterelement zeichnet sich dadurch aus, dass an der Verbindungsstelle die Enden der Filtermattenbahn derart miteinander vereinigt sind, dass die Endränder der Innenseite des zu bildenden Ringkörpers zugewandt sind, so dass die beiden, an die Verbindungsstelle angrenzenden Falten mit ihren Gipfeln am Ringkörper außen gelegen und dem Stützrohr zugewandt sind. Dadurch dass hierbei die Verbindungsstelle, also die Schweißnaht oder Klebestelle, mittels deren der den Filterzylinder bildende Ringkörper geschlossen ist, am Filterzylinder innenliegend gelegen ist, ist die Verbindungsstelle beidseitig durch die angrenzenden Falten, die mit ihren Gipfeln am Ringkörper außen gelegen sind, am Stützrohr abgestützt. Die Verbindungsstelle bildet bei dieser Anordnung keine Schwachstelle gegenüber den aufgrund des im Betrieb anliegenden Differenzdruckes wirksamen Kräften.

Vorteilhafte Ausgestaltungen des erfindungsgemäßen Filterelements sind Gegenstände der Unteransprüche.

Dadurch, dass in der erfindungsgemäßen Weise besondere Schutzvorkehrungen getroffen sind, die ein Beulen der Falten an der Verbindungsstelle verhindern, ergibt sich selbst bei hohen Durchflußleistungen und entsprechend hohen Fluid-Differenzdrücken, die im Bereich der Verbindungsstelle wirksam sind, die erstrebte Verbesserung der Betriebssicherheit. Durch die erfindungsgemäße Ausbildung von Halteteilen ergibt sich eine besonders sichere Abstützung der Falten im Bereich der Verbindungsstelle.

Vorzugsweise ist die Filtermattenbahn durch einen flexiblen Mattenaufbau aus metallfreien, kunststoffgestützten Filtermatten gebildet, wobei die Verbindung der Enden der Filtermattenbahn, wodurch ein geschlossener Ringkörper gebildet wird, durch eine Schweißnaht hergestellt ist. Um eine einfache und rationelle Fertigung zu ermöglichen, muß der Schweißvorgang an der Außenseite des Ringkörpers durchgeführt werden, was bedeutet, dass die Verbindungsstelle an der Außenseite des Filterzylinders gelegen ist, so dass, wie oben erwähnt, die Schweißnaht im Betrieb eine Schwachstelle des Filterzylinders bilden würde.

Um dem Rechnung zu tragen, sieht die Erfindung gemäß einem besonders vorteilhaften Ausführungsbeispiel vor, dass die flexible Filtermattenbahn derart dimensioniert ist, dass der Ringkörper nach Ausbildung einer außenliegenden Schweißnaht umwendbar ist, so dass die Schweißnaht am gewendeten, nunmehr gebrauchsfertigen Ringkörper innenliegend ist. Trotz der einfachen Herstellungsweise, nämlich der Bildung einer Schweißnaht an der Außenseite, ist der den Filterzylinder bildende Ringkörper daher nach dem Umwenden in erstrebter Weise gegen Beulen im Bereich der jetzt innenliegenden Schweißnaht geschützt.

Gegenstand der Erfindung ist auch ein zur Herstellung des erfindungsgemäßen Filterelementes vorgesehenes Verfahren, das die Merkmale des Patentanspruches 6 aufweist.

Nachstehend ist die Erfindung anhand von in der Zeichnung dargestellten Ausführungsbeispielen im Einzelnen erläutert. Es zeigen:

- Fig. 1 eine Draufsicht eines als Filterzylinder für ein erfindungsgemäßes Filterelement vorgesehenen Ringkörpers in teilgefertigtem Zustand, wobei eine von außen her gebildete Schweißnaht am Ringkörper außenliegend ist;
- Fig. 2 eine der Fig. 1 ähnliche Draufsicht des den Filterzylinder bildenden Ringkörpers, d. h. mit nach dem Umwenden innenliegend befindlicher Schweißnaht;
- Fig. 3 eine perspektivische Darstellung des Ringkörpers von Fig. 2;
- Fig. 4 eine perspektivische Darstellung der im Zuge des Umwendens des Ringkörpers von Fig. 1 gebildeten Filterscheibe;
- Fig. 5 eine stark vergrößert gezeichnete Darstellung eines Faltenabschnittes des Ringkörpers mit Angaben zur Dimensionierung;
- Fig. 6 einen Querschnitt eines Filterelementes;
- Fig. 7 eine perspektivische Ansicht des Stützrohres des Filterelementes von Fig. 6 ohne darin befindlichen Filterzylinder;
- Fig. 8 eine perspektivisch und auseinandergezogen gezeichnete Darstellung eines Filterelementes; und
- Fig. 9 ein erfindungsgemäßes Filterelement.

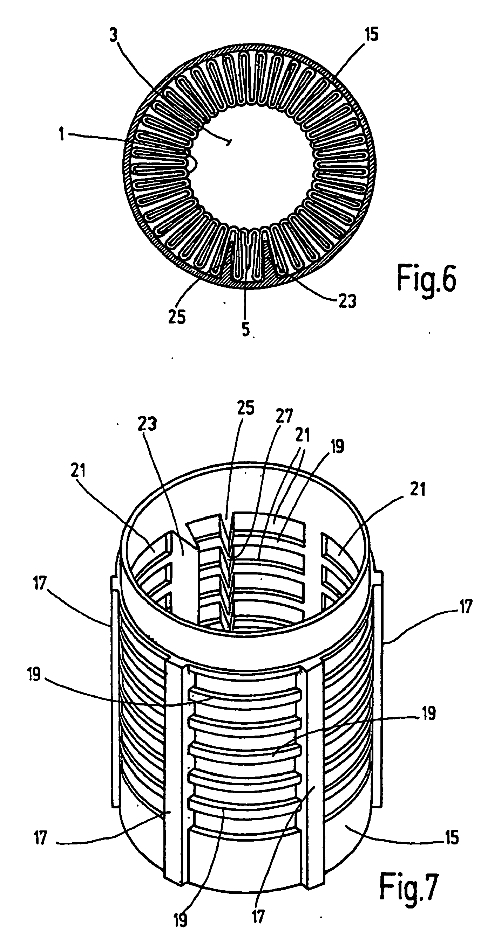

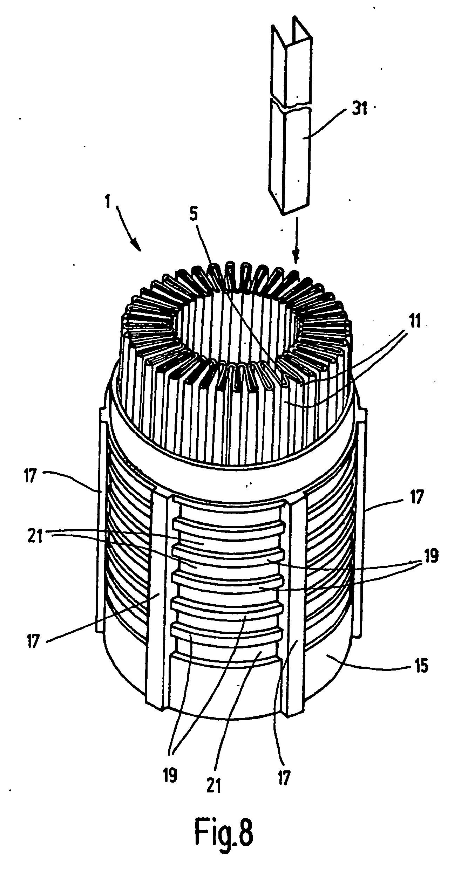

Fig. 6 und 8 dienen lediglich der Erläuterung des Hintergrundes der Erfindung. Die darin dargestellten Filterelemente sind nicht Gegenstand eines Anspruches.

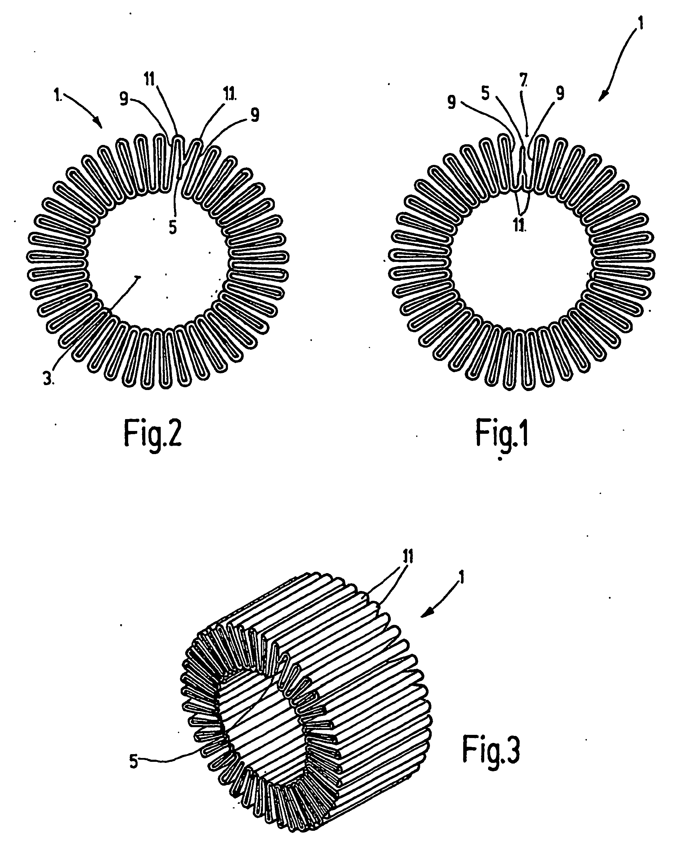

Es wird auf Fig. 1 bis 5 Bezug genommen, die ein erstes Ausführungsbeispiel des erfindungsgemäßen Filterelementes verdeutlichen, von dem in diesen Fig. das in üblicher Weise gestaltete Stützrohr nicht gezeigt ist, das im Fertigzustand den Filterzylinder umgibt, welcher als Ganzes mit 1 bezeichnet und in der in Fig. 2 und 3 gezeigten Form im nicht gezeigten Stützrohr aufgenommen ist. Im Betrieb wird der Ringkörper von seinem in Fig. 2 mit 3 bezeichneten Innenraum her von dem zu filternden Fluid durchströmt, d. h. die Reinseite der das erfindungsgemäße Filterelement aufweisenden, nicht näher dargestellten Filtervorrichtung befindet sich an der Außenseite des den Ringkörper 1 umgebenden Stützrohres.

Wie aus den Fig. ersichtlich, ist der Ringkörper 1 aus einer gefalteten Filtermattenbahn gebildet, die zur Bildung eines geschlossenen Ringes an ihren beiden Enden vereinigt ist, wobei die Verbindungsstelle durch eine Schweißnaht 5 ausgeführt ist. Bei den hier beschriebenen Ausführungsbeispielen ist die Filtermattenbahn durch einen flexiblen Mattenaufbau mit Rückstelleigenschaften gebildet, genauer gesagt aus metallfreien, kunststoffgestützten Filtermatten, die zur Herstellung des Ringkörpers 1 mit längs verlaufender Schweißnaht 5 verschweißbar sind.

Vorzugsweise ist ein sechslagiger Aufbau der Filtermattenbahn vorgesehen, die in Aufeinanderfolge folgende Lagen aufweist: eine äußere Abstützung, ein Schutzvlies, eine Vorfilterlage, eine Hauptfilterlage, ein Stützvlies und eine innere Abstützung. Für die äußere Abstützung kommen ein Polyamidgitter oder ein Polyestergewebe in Frage. Als Schutzvlies kann ein Polyestermaterial vorgesehen sein. Für die Vorfilterlage kommen ein Glasfasermaterial, vorzugsweise in hinsichtlich der Dicke und des Flächengewichtes reduzierter Form, oder Meltblown in Frage. Die Hauptfilterlage kann in ähnlicher Weise ein Glasfasermaterial sein, das gegebenenfalls imprägniert ist, oder Meltblown. Als Stützvlies kann wiederum ein Polyester- oder Polyamidmaterial Verwendung finden oder ein Viskosevlies oder ein Polyamid mit Meltblown. Die innere Abstützung kann in ähnlicher Weise wie die äußere Abstützung als Gitter- oder Gewebestruktur auf Polyamid- oder Polyesterbasis ausgeführt sein.

Wie der Vergleich der Fig. 1 bis 4 zeigt, ist durch Umwenden des Ringkörpers 1 aus dem in Fig. 1 gezeigten Anfangszustand, bei dem die Schweißnaht 5 außenliegend ist, d. h. durch eine von außen her gefertigte Längsnaht gebildet ist, diese Schweißnaht 5 bei den in Fig. 2 und 3 gezeigten Fertigzustand nach innen verlagert. Während sich bei dem Zustand von Fig. 1 mit außenliegender Schweißnaht 5 am Außenrand des Ringkörpers 1 eine Lücke 7 ergibt, in deren Bereich keine Berührung der Gipfel 11 der an die Schweißnaht 5 beidseits unmittelbar angrenzenden Falten 9 mit dem umgebenden Stützrohr (nicht dargestellt) erfolgt, sind bei dem in Fig. 2 und 3 gezeigten, umgewendeten Zustand die Gipfel 11 der unmittelbar an die Schweißnaht 5 angrenzenden Falten 9 außenliegend angeordnet, siehe Fig. 2, und somit am Stützrohr anliegend abgestützt.

Während bei dem Zustand von Fig. 1 bei der im Betrieb herrschenden Druckdifferenz die Gefahr des Beulens im Bereich der Schweißnaht 5 besteht, die durch Druckkräfte radial nach außen bewegbar ist, wobei an der Schweißnaht 5 Zugkräfte im Sinne des Aufreißens der Naht wirksam sind, ist bei dem in Fig. 2 und 3 gezeigten, gewendeten Zustand weder ein Beulen durch Radialbewegung der Schweißnaht 5 möglich, da die angrenzenden Faltengipfel 11 abgestützt sind, noch ist die Schweißnaht 5 durch trennend wirkende Druckkräfte belastet.

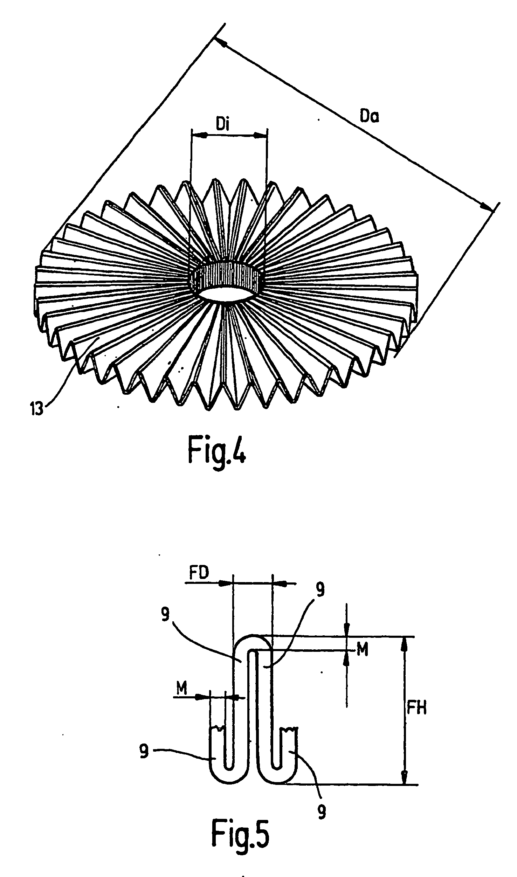

Fig. 4 und 5 dienen zur Verdeutlichung der Ausbildung und Dimensionierung der den Ringkörper 1 bildenden Filtermattenbahn, d. h. einer Ausbildung, die das Wenden des Ringkörpers ermöglicht. Die maximale Länge des Ringkörpers, die, wenn er aus einem flexiblen Faltenaufbau gebildet ist, ein Umwenden gestattet, ist abhängig von der Faltenanzahl, der Faltenhöhe, der Materialstärke des Mattenaufbaus und den Faltendicken des Ringkörpers. In Fig. 4 sind Außen- und Innendurchmesser des Scheibenköpers 13 verdeutlicht, wie er sich im Zuge des Umwendens des Ringkörpers 1 vorübergehend ergibt. Fig. 5 verdeutlicht die Dimensionierung der Falten 9 sowohl hinsichtlich Materialstärke als auch Faltengröße.

Anhand der in Fig. 4 und 5 gezeichneten Parameter läßt sich die maximale Länge des Ringkörpers wie folgt herleiten:

$F_{Anz}$     = Faltenanzahl
$F_H$     = Faltenhöhe
$F_D$     = Faltendicke
$M$     = Materialstärke des Mattenaufbaus
$L_M$     = gestreckte Länge der Filterbahn
$L_{Mmax}$     = maximale gestreckte Länge der Filterbahn
$D_{a_{max}}$     = maximaler Außendurchmesser der Filterscheibe
$D_i$     = Innendurchmesser der Filterscheibe
$L_{max}$     = maximale Länge des Filterzylinders

1)

$$L_M = 2^* F_{Anz} * \left( F_H - 2^* M + \frac{\pi^* M}{2} \right)$$

2)

$$D_{a_{max}} = D_i + 2^* L_{max}$$

3)

$$L_{max} = \frac{D_{a_{max}} - D_i}{2}$$

4)

$$D_{i2} = \frac{F_{Anz} * F_D}{\pi}$$

5)

$$L_{M_{max}} = D_{a_{max}} * \pi$$

6)

$$D_{a_{max}} = \frac{L_{M_{max}}}{\pi}$$

7)

$$D_{a_{max}} = D_i + 2 * L_{max}$$

8)

$$L_{max} = \frac{D_{a_{max}} - D_i}{2}$$

9)

$$L_{max} = \frac{\dfrac{L_{M_{max}}}{\pi} - D_i}{2} \qquad \text{8) mit 6)}$$

10)

$$L_{max} = \frac{L_{M_{max}} - F_{Anz} * F_D}{2 * \pi} \qquad \text{9) mit 4)}$$

11)

$$L_{max} = \frac{F_{Anz} * \left( F_H - 2 * M + \dfrac{\pi * M}{2} - \dfrac{F_D}{2} \right)}{\pi} \qquad \text{10) mit 1)}$$

Fig. 6 und 7 verdeutlichen ein Filterelement, wobei im Unterschied zum vorausgehenden Beispiel auch das den Filterzylinder umgebende Stützrohr 15 gezeigt ist, das in Fig. 7 gesondert, d. h. ohne eingesetzten Filterzylinder, dargestellt ist. Wie aus Fig. 7 deutlich zu ersehen ist, weist das Stützrohr 15, das aus Kunststoff spritzgeformt ist, an der Außenseite, welche bei einer betreffenden Filtervorrichtung an die Reinseite angrenzt, längsverlaufende Leisten 17 auf, die durch Ringsegmente bildende Stege 19 verbunden sind, zwischen denen sich Fenster 21 als Fluiddurchlässe befinden. Wie aus Fig. 6 entnehmbar ist, ist bei in das Stützrohr 15 eingesetztem Filterzylinder der der Schweißnaht 5 beidseits benachbarte Bereich durch eine Haltevorrichtung gesichert, die Haltenasen 23 und 25 aufweist, welche diejenigen Falten des Ringkörpers, welche der Schweißnaht 5 beidseits benachbart sind, an ihren von der Schweißnaht 5 abgekehrten Flanken übergreift, siehe Fig. 6.

Wie insbesondere aus Fig. 7 zu entnehmen ist, sind die Haltenasen 23 und 25 an der Innenseite des Stützrohres 5 einstückig angeformt, wobei eine Haltenase 23 entlang einer Leiste 17 des Stützkörpers durchgehend ausgebildet ist, während auf der anderen Seite geteilte Haltenasen 25 vorgesehen sind, zwischen denen sich Zwischenräume 27 entsprechend den die Fluiddurchlässe bildenden Fenstern 21 befinden. Bei der durch die Haltenasen 23 und 25 gebildeten Einfassung des Bereiches der Schweißnaht 5 ergibt sich eine wirksame Sicherung gegen die Gefahr des Beulens im Verbindungsstellenbereich.

Fig. 8 zeigt ein Filterelement mit einem Stützrohr 15 ohne innere Haltenasen 23 und 25. Anstelle der Einfassung des Bereiches der Verbindungsstelle, d. h. der Schweißnaht 5, ist bei diesem Ausführungsbeispiel eine Haltevorrichtung mit einem metallischen Klammerelement 31 U-förmigen Querschnittes vorgesehen, das auf die der Schweißnaht 5 abgekehrten Flanken der an die Schweißnaht 5 angrenzenden Falten aufsteckbar ist und in seiner Haltewirkung den Haltenasen 23 und 25 des vorausgehenden Filterelementes im wesentlichen entspricht.

Zusätzlich ist bei dem in Fig. 8 gezeigten Beispiel der Ringkörper 1 zu dem in Fig. 2 gezeigten Zustand umgewendet, so dass die Schweißnaht 5 innenliegend ist und die an diese angrenzenden Falten mit ihren Gipfeln 9 unmittelbar am Stützrohr 15 abgestützt sind. Dieses Filterelement ist daher im Bereich der Schweißnaht 5 gegen Beulen auf zweifache Weise gesichert.

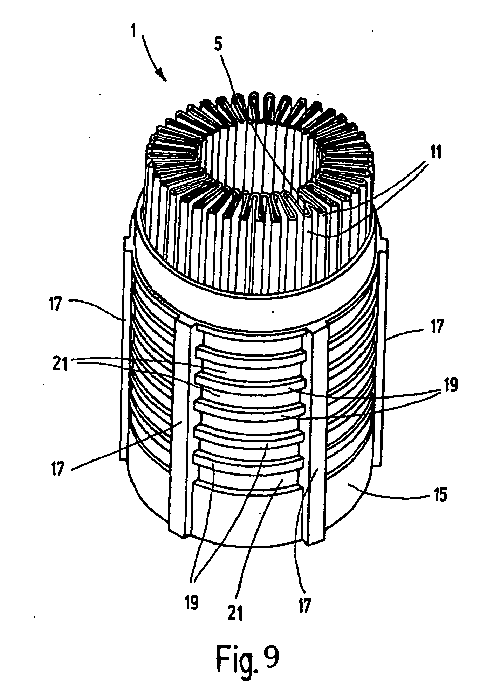

Fig. 9 zeigt ein Filterelement umfassend:

- einen Filterzylinder aus einer Filtermattenbahn, die eine Folge von zumindest bereichsweise aneinander anliegenden Falten 9 (vgl. Fig. 2) aufweist und deren beide Enden an einer Verbindungsstelle 5 zur Bildung eines Ringkörpers 1 miteinander verbunden sind,
- eine im Bereich der Verbindungsstelle 5 angeordnete Halteeinrichtung, die bei einer Durchströmung von zu filterndem Fluid von einer Innenseite 3 (vgl. Fig. 2) zur Außenseite des Filterzylinders ein Trennen der Enden der Filtermattenbahn verhindert,
- wobei das Stützrohr 15 als spritzgepresstes Kunststoffteil mit daran einstückig geformten, die Halteeinrichtung ausbildenden Haltenasen 23, 25 gebildet ist (vgl. Fig. 7),

dadurch gekennzeichnet, dass

- ein an einer Außenseite des Filterzylinders anliegendes, fluiddurchlässiges Stützrohr 15 vorgesehen ist und dass
- an der Verbindungsstelle 5 die Enden der Filtermattenbahn derart miteinander vereinigt sind, dass die Endränder der Innenseite 3 des zu bildenden Ringkörpers 1 zugewandt sind, so dass die beiden, an die Verbindungsstelle 5 angrenzenden Falten 9 mit ihren Gipfeln 11 am Ringkörper 1 außen gelegen (vgl. Fig. 2) und dem Stützrohr 15 zugewandt sind.

**Patentansprüche**

1. Filterelement umfassend:

   - einen Filterzylinder aus einer Filtermattenbahn, die eine Folge von zumindest bereichsweise aneinander anliegenden Falten (9) aufweist und deren beide Enden an einer Verbindungsstelle (5) zur Bildung eines Ringkörpers (1) miteinander verbunden sind,
   - eine im Bereich der Verbindungsstelle (5) angeordnete Halteeinrichtung, die bei einer Durchströmung von zu filterndem Fluid von einer Innenseite (3) zur Außenseite des Filterzylinders ein Trennen der Enden der Filtermattenbahn verhindert,
   - wobei das Stützrohr (15) als spritzgepresstes Kunststoffteil mit daran einstückig geformten, die Halteeinrichtung ausbildenden Haltenasen (23, 25) gebildet ist,
   - **dadurch gekennzeichnet, dass**
   - ein an einer Außenseite des Filterzylinders anliegendes, fluiddurchlässiges Stützrohr (15) vorgesehen ist und dass
   - an der Verbindungsstelle (5) die Enden der Filtermattenbahn derart miteinander vereinigt sind, dass die Endränder der Innenseite (3) des zu bildenden Ringkörpers (1) zugewandt sind, so dass die beiden, an die Verbindungsstelle (5) angrenzenden Falten (9) mit ihren Gipfeln (11) am Ringkörper (1) außen gelegen und dem Stützrohr (15) zugewandt sind.

2. Filterelement nach Anspruch 1, **dadurch gekennzeichnet, dass** die Haltenasen (23, 25) an der Innenseite des Stützrohres (15) radial nach innen vorspringend ausgebildet sind.

3. Filterelement nach einem der vorhergehenden Ansprüche, dadurchgekennzeichnet, dass die Filtermattenbahn durch einen flexiblen Mattenaufbau aus metallfreien, kunststoffgestützten Filtermatten gebildet ist.

4. Filterelement nach einem der vorhergehenden Ansprüche, **dadurch gekennzeichnet, dass** die Verbindung der Enden der Filtermattenbahn durch eine Schweißnaht (5) gebildet ist.

5. Filterelement nach den Ansprüchen 3 und 4, **dadurch gekennzeichnet, dass** die flexible Filtermattenbahn derart dimensioniert ist, dass der Ringkörper (1) nach Ausbildung einer außenliegenden, die Enden der Filtermattenbahn verbindenden Schweißnaht (5) umwendbar ist, so dass die Schweißnaht (5) am gewendeten Ringkörper (1) innenliegend ist.

**6.** Verfahren zum Herstellen eines Filterelementes nach einem der vorausgehenden Ansprüche, **dadurch gekennzeichnet, dass** ein an seiner Außenseite an einem fluiddurchlässigen Stützrohr (15) anliegender Filterzylinder gebildet wird, indem eine eine Folge von zumindest bereichsweise aneinander anliegender Falten (9) aufweisende, flexible Filtermattenbahn an ihren Endrändern zur Bildung eines Ringkörpers (1) vereinigt und längs einer am Ringkörper (1) außen liegenden Verbindungsstelle (5) verbunden wird, und dass der gebildete Ringkörper (1) umgewendet wird, so dass die Verbindungsstelle (5) an ihm innenliegend ist.

**Claims**

**1.** A filter element comprising:

- a filter cylinder made up of a filter mat web having a sequence of folds (9) adjacent to each other at least in some areas, and the two ends of which are connected to each other at a connecting point (5) to form an annular body (1),
- a holding device located in the region of the connecting point and (5) which prevents separation of the ends of the filter mat web when fluid to be filtered flows through from an interior (3) to the outside of the filter cylinder,
- the support tube (15) being formed as an injection-moulded plastic part with holding projections (23, 25) forming the holding device moulded integrally onto the latter,
- **characterised in that**
- a support tube (15) through which fluid can pass positioned on an exterior of the filter cylinder is provided, and that
- the ends of the filter mat web are joined to each other at the connecting point (15) such that the end edges of the interior (3) of the annular body (1) to be formed are facing one another so that the tops (11) of the two folds (9) adjacent to the connecting point (5) are positioned on the exterior on the annular body (1) and are facing the support tube (15).

**2.** The filter element according to Claim 1, **characterised in that** the holding projections (23, 25) are formed projecting radially inwards on the interior of the support tube (15).

**3.** The filter element according to any of the preceding claims, **characterised in that** the filter mat web is formed by a flexible mat structure made up of metal-free, plastic-supported filter mats.

**4.** The filter element according to any of the preceding claims, **characterised in that** the connection of the ends of the filter mat web is formed by a welded seam (5).

**5.** The filter element according to Claims 3 and 4, **characterised in that** the flexible filter mat web is dimensioned such that the annular body (1) may be reversed after formation of a welded seam (5) positioned on the exterior and connecting the ends of the filter mat web so that the welded seam (5) is positioned in the interior on the reversed annular body (1).

**6.** A method for producing a filter element according to any of the preceding claims, **characterised in that** a filter cylinder adjacent to a support tube (15) through which fluid can pass is formed on its exterior, a flexible filter mat web having a sequence of folds (9) adjacent to each other, at least in some areas, which join at their end edges to form an annular body (1) and being connected along a connecting point (5) positioned on the exterior on the annular body (1), and that the annular body (1) formed is reversed so that the connecting point (5) is lying in the interior of the latter.

**Revendications**

**1.** Elément de filtration comprenant :

- un cylindre de filtre en une bande de nappe filtrante, qui a une suite de plis (9) s'appliquant l'un à l'autre, au moins par endroit, et dont les deux extrémités sont reliées entre elles en un point (5) de liaison pour la formation d'une pièce (1) annulaire,
- un dispositif de maintien, qui est disposé dans la zone du point (5) de liaison et qui empêche, lorsque du fluide à filtrer traverse de la face (3) intérieure à la face extérieure du cylindre de filtre, une séparation des extrémités de la bande de nappe filtrante,

- dans lequel le tube (15) d'appui est sous la forme d'une pièce en matière plastique moulée par extrusion et ayant des becs (23, 25) de maintien, qui y sont moulés d'un seul tenant et qui forment le dispositif de maintien,
- **caractérisé en ce que**
- il est prévu un tube (15) d'appui perméable au fluide et s'appliquant à une face extérieure du cylindre de filtre et **en ce que**
- les extrémités de la bande de nappe filtrante sont réunies entre elles au point (5) de liaison, de manière à ce que les bords d'extrémité soit tournés vers la face (3) intérieure de la pièce (1) annulaire à former, de sorte que les deux plis (9) voisins du point (5) de liaison soient mis extérieurement par leur sommet (11) sur la pièce (1) annulaire et soient tournés vers le tube (15) d'appui.

2. Elément de filtration suivant la revendication 1, **caractérisé en ce que** les becs (23, 25) de maintien sont formés en faisant saillie radialement vers l'intérieur sur la face intérieure du tube (15) d'appui.

3. Elément de filtration suivant l'une des revendications précédentes, **caractérisé en ce que** la bande de nappe filtrante est formée par une structure de nappe souple, en nappe filtrante sans métal et supportée par de la matière plastique.

4. Elément de filtration suivant l'une des revendications précédentes, **caractérisé en ce que** la liaison des extrémités de la bande de nappe filtrante est formée par un cordon (5) de soudure.

5. Elément de filtration suivant les revendications 3 et 4, **caractérisé en ce que** la bande de nappe filtrante souple a des dimensions telles que la pièce (1) annulaire peut, après formation d'un cordon (5) de soudure se trouvant à l'extérieur et reliant les extrémités de la bande de nappe filtrante, être retournée, de sorte que le cordon (5) de soudure se trouve à l'intérieur sur la pièce (1) annulaire retournée.

6. Procédé de fabrication d'un élément de filtration suivant l'une des revendications précédentes, **caractérisé en ce que** l'on forme un cylindre de filtre s'appliquant sur sa face extérieure à un tube (15) d'appui perméable au fluide en réunissant, sur ses bords d'extrémité, pour la formation d'une pièce annulaire, une bande de nappe filtrante souple ayant une succession de plis (9) s'appliquant l'un à l'autre, au moins par endroit, et on la relie le long d'un point (5) de liaison se trouvant à l'extérieur sur la pièce (1) annulaire et **en ce que** l'on retourne la pièce (1) annulaire formée, de manière à ce que le point (5) de liaison s'y applique à l'intérieur.

Fig.2

Fig.1

Fig.3

Di

Da

13

**Fig.4**

FD

9

9

M

M

FH

9

9

**Fig.5**

Fig.6

Fig.7

Fig.8

Fig. 9

**EP 1 525 041 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5622624 A
- US 6368506 B1